# EUROPÄISCHE PATENTSCHRIFT

(11) **EP 0 730 995 B1**
(45) Veröffentlichungstag und Bekanntmachung des Hinweises auf die Patenterteilung: **06.02.2002**
(21) Anmeldenummer: 96100003.1
(22) Anmeldetag: 02.01.1996
(51) Int. Cl.: B60N 3/10

(54) **Halterung für einen Getränkebehälter**
Support for a beverage container
Support pour un conteneur de boisson

(30) Priorität: 04.03.1995 DE 19507614
(43) Veröffentlichungstag der Anmeldung: 11.09.1996
(73) Patentinhaber: fischerwerke Artur Fischer GmbH & Co. KG, 72178 Waldachtal (DE); AUDI AG, 85045 Ingolstadt (DE)
(72) Erfinder: Bieck, Torsten, Dipl.-Ing., D-72178 Waldachtal (DE); Simmel, August, Dipl.-Ing., 85139 Wettstetten (DE); Wagner, Brigitte, Dipl.-Ing., 85101 Lenting (DE); Breyer, Gunter, 85055 Ingolstadt (DE)

(56) Entgegenhaltungen:
- EP-A- 0 447 263
- DE-A- 4 318 249
- US-A- 4 738 423
- US-A- 5 297 709

## Beschreibung

Die Erfindung betrifft eine Halterung für einen Getränkebehälter, die zum Einbau in das Armaturenbrett eines Kraftwagens oder dgl. vorgesehen ist, mit den Merkmalen des Oberbegriffs des Anspruchs 1.

Es sind verschiedene derartige Halterungen bekannt, die in horizontaler Richtung ausziehbare Schlitten als Getränkehalter aufweisen. Eine solche Konstruktion erfordert einen horizontalen Einbauraum. Aus der gattungsbildenden DE-A-43 18 249 ist eine Halterung für einen Getränkebehälter bekannt, deren Schlitten schräg nach oben ausziehbar ist. Die schräge Anordnung des Schlittens ermöglicht in vielen Fällen die Anbringung der Halterung, in denen für eine horizontale Anbringung kein Platz zur Verfügung steht.

Der Schlitten der bekannten Halterung weist eine horizontale, mit dem Schlitten starre und einstückige Abstellfläche für einen Getränkebehälter auf. An einer Oberseite weist der Schlitten der bekannten Halterung einen Halter mit einer Einstellöffnung zum Einstellen des Getränkebehälters auf. Der Halter ist an einem in Ausziehrichtung vorderen Rand schwenkbar mit dem Schlitten verbunden und verschwenkt beim Verschieben des Schlittens aus einer eingeschobenen Grundstellung in eine ausgezogene Haltestellung nach oben in eine horizontale Lage.

Die bekannte Halterung kann den Nachteil aufweisen, daß durch die horizontale, also in einem Winkel zum schräg angeordneten Schlitten starr an diesem angebrachte Abstellfläche für den Getränkebehälter eine Bauhöhe des Schlittens in dessen vorderem, die Einstellöffnung für den Getränkebehälter aufweisenden Bereich vergrößert ist. Weiterer Nachteil der bekannten Halterung ist, daß der die Einstellöffnung für den Getränkebehälter aufweisende Halter einen eingestellten Getränkebehälter in einer einer Höhe des Schlittens entsprechenden Höhe über der Abstellfläche seitlich abstützt. Die Stützhöhe ist dementsprechend niedrig und läßt sich nur durch eine Vergrößerung der Bauhöhe des Schlittens vergrößern. Die niedrige Stützhöhe für den Getränkebehälter hat den Nachteil, daß nur vergleichsweise niedrige Getränkebehälter zuverlässig gegen Kippen in der bekannten Halterung gehalten sind.

Ausgehend von einer Halterung der vorstehend erläuterten Art liegt der Erfindung die Aufgabe zu Grunde, die Halterung so auszubilden, daß sie eine große Stützhöhe für einen eingestellten Getränkebehälter aufweist, um einen eingestellten Getränkebehälter zuverlässig gegen Kippen seitlich abzustützen.

Diese Aufgabe wird erfindungsgemäß gelöst durch die Merkmale des Anspruchs 1. Der Schlitten der erfindungsgemäßen Halterung verfährt ausschließlich translatorisch in Richtung seiner Führung. Die Schlittenführung läßt sich dadurch stabil ausbilden. Der Schlitten wird nicht verschwenkt, das Verschieben in die Haltestellung und die Grundstellung erfolgt mit einer einfachen, geradlinigen Bewegung. Der Schlitten steht in seiner Haltestellung schräg. An ihm ist schwenkbar ein Halter zum Einstellen eines Getränkebehälters angebracht, der beim Verschieben des Schlittens in die Haltestellung in eine horizontale Lage verschwenkt, in welcher er einen eingestellten Getränkebehälter aufrecht hält. Des weiteren ist am Schlitten eine Stütze, die eine Abstellfläche aufweist, verschwenkbar angebracht. Die Stütze verschwenkt beim Verschieben des Schlittens in die Haltestellung so, daß ihre Abstellfläche nach unten unter den Halter gelangt. Der Halter umgreift einen eingestellten Getränkebehälter, der auf der Abstellfläche der Stütze steht. Die Stütze ist mit dem Halter beispielsweise mittels eines in ein Langloch eingreifenden Zapfens gelenkig verbunden, so daß sie zwangsweise mit ihrer Abstellfläche nach unten schwenkt, wenn der Halter in seine horizontale Lage schwenkt. Durch das Verschwenken der Stütze mit der Abstellfläche nach unten gelangt die Abstellfläche in einen ausreichend großen vertikalen Abstand vom Halter, um einen in die erfindungsgemäße Halterung eingestellten Getränkebehälter, der vom Halter umfaßt wird, sicher gegen Kippen zu halten. In der eingeschobenen Grundstellung des Schlittens sind der Halter und die Stütze flach ineinander in eine Ebene mit dem Schlitten verschwenkt, wodurch sich die erfindungsgemäße Halterung in einem niedrigen Einbauraum unterbringen läßt. Durch die nach unten schwenkende Stütze mit der Abstellfläche für den Getränkebehälter weist die erfindungsgemäße Halterung eine große Stützhöhe zwischen der Abstellfläche und dem die Einstellöffnung für den Getränkebehälter aufweisenden Halter auf. Vorteilhafterweise ist die Stützhöhe der erfindungsgemäßen Halterung größer als eine Einbauhöhe des Schlittens. Durch die große Stützhöhe wird eine sichere Abstützung eines eingestellten Getränkebehälters gegen Kippen auch bei flacher Bauweise des Schlittens erreicht.

Erfindungsgemäß ist ein Rückstellglied schwenkbar am Schlitten angebracht. Dieses greift unmittelbar oder mittelbar über die Stütze am Halter an.

Das Rückstellglied verschwenkt also, wenn der Halter in seine horizontale Lage gebracht wird, indem der Schlitten in die Haltestellung ausgezogen wird. Das Rückstellglied weist eine Rückstellfläche auf, die beim Einschieben des Schlittens in die Grundstellung an einer ortsfesten Gegenfläche der Halterung entlanggleitet, wodurch das Rückstellglied in seine ursprüngliche Lage zurückschwenkt und dabei den Halter unmittelbar oder mittelbar über die Stütze aus der horizontalen in eine geneigte, zum Schlitten in etwa parallele Ausgangslage zurück verschwenkt. Zugleich mit dem Halter verschwenkt auch die mit ihm gelenkig verbundene Stütze. Auf diese Weise verschwenken der Halter, die Stütze und das Rückstellglied durch das Verschieben des Schlittens in die Haltestellung gemeinsam in eine aufgeklappte Stellung und beim Einschieben des Schlittens in eine flache, zusammengeklappte Stellung.

Bei einer Weiterbildung der Erfindung weisen der Halter oder die Stütze eine Steuerkurve auf, in die das Rückstellglied eingreift. Diese Steuerkurve ist so geformt, daß das Rückstellglied den Halter und die mit ihm gelenkig verbundene Stütze bei in die Haltestellung ausgezogenem Schlitten in der aufgeklappten Stellung verriegelt. Dies wird durch die Verlaufsrichtung eines Endabschnitts der Steuerkurve, in welchem sich das Rückstellglied bei ausgeklapptem Halter bzw. ausgeklappter Stütze befindet, erreicht. Dieser Endabschnitt verläuft in etwa tangential zu einer Schwenkachse des Rückstellglieds, wodurch ein auf die Stütze oder den Halter wirkendes Schwenkmoment eine Kraft des Rückstellglieds quer zur Steuerkurve verursacht und dadurch ein Verschwenken des Halters und der Stütze verhindert. Oder der Endabschnitt verläuft weg von der Schwenkachse des Rückstellglieds, wodurch das Rückstellglied gegen einen Endanschlag der Steuerkurve stößt, wenn die Stütze oder der Halter aus ihrer ausgeklappten Stellung verschwenkt werden, wodurch ein Einklappen von Stütze und Halter verhindert wird. Das Einklappen des Halters und der an ihm angreifenden Stütze läßt sich bei dieser Ausführungsform der Erfindung also nur durch Einwirkung auf das Rückstellglied erreichen, das den Halter und die Stütze beim Einschieben des Schlittens in die eingeklappte Lage verschwenkt. Der Halter und die Stütze sind auf diese Weise gesichert gegen ein Einklappen durch versehentliches Stoßen gegen eines dieser beiden Teile.

Das Verschwenken des Halters in seine horizontale Lage und der Stütze mit ihrer Abstellfläche nach unten erfolgt bei einer Ausgestaltung der Erfindung mittels eines am Halter und/oder eines am Rückstellglied angreifenden Federelements.

Bei einer Ausgestaltung der Erfindung wird der Schlitten von einer Feder in seine Haltestellung herausgeschoben. In seiner Grundstellung wird der Schlitten mit einer Verriegelung gehalten. Die erfindungsgemäße Halterung gelangt bei dieser Ausgestaltung nach Entriegelung des Schlittens von selbst in die Haltestellung, in der ein Getränkebehälter in sie eingestellt werden kann. Der Schlitten muß also nicht von Hand herausgezogen werden.

Bei einer Weiterbildung ist die Feder eine Rollfeder. Dies ist eine Blattfeder, die sich aufgrund ihrer Elastizität von selbst von einem Ende her zu einem Wickel aufrollt. Die Rollfeder bewirkt eine Zugkraft an ihrem freien, vom Wickel abgerollten Ende.

Die Bewegung von Schlitten, Halter und Stütze werden vorzugsweise mittels Dämpfungselementen gedämpft. Die Erfindung wird nachfolgend anhand eines Ausführungsbeispiels näher erläutert, das in der Zeichnung dargestellt ist.

Es zeigen:
- Figur 1: eine Seitenansicht einer erfindungsgemäßen Halterung in einer geschlossenen Grundstellung;
- Figur 2: eine Schnittdarstellung der Halterung aus Figur 1 in einer geöffneten Haltestellung;
- Figur 3: eine Draufsicht auf die Halterung gemäß Figur 2; und
- Figur 4: eine perspektivische, teils ausgebrochene Darstellung der Halterung gemäße Figur 2.

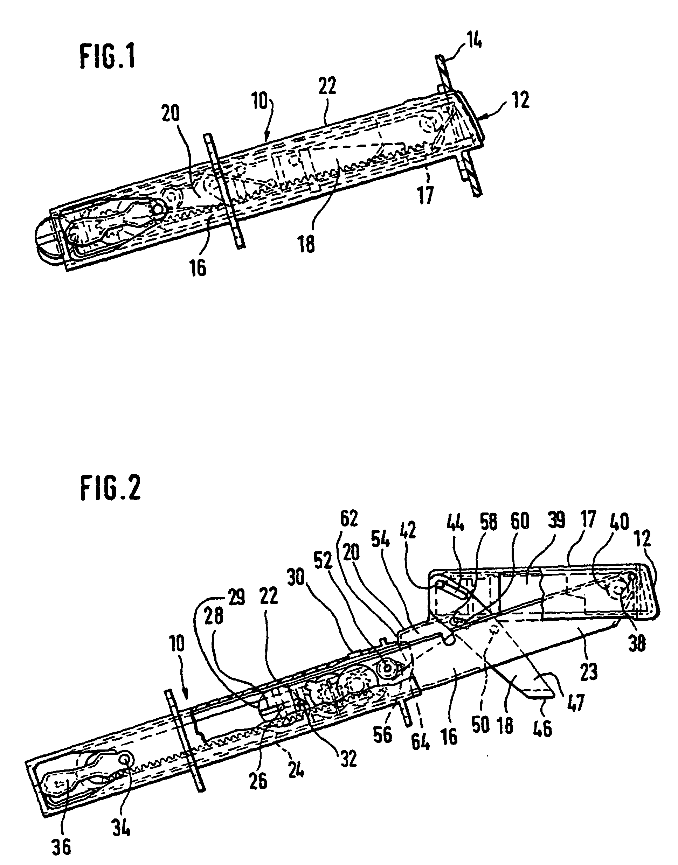

In Figur 1 ist die erfindungsgemäße Halterung 10 in ihrer Grundstellung dargestellt. Sie schließt mit einer Blende 12 bündig mit dem andeutungsweise dargestellten Armaturenbrett 14 eines Kraftwagens ab. Mit Strichlinien ist die Lage eines Schlittens 16, eines Halters 17, einer Stütze 18 sowie eines Rückstellglieds 20 angedeutet. Diese Teile 16, 17, 18, 20 sind flach ineinandergeklappt in einem Gehäuse 22 untergebracht. Das Gehäuse 22 führt den Schlitten 16 verschiebbar nach Art einer Schublade. Das Gehäuse 22 ist geneigt im Armaturenbrett 14 angebracht, so daß der Schlitten 16 schräg nach oben in die in Figur 2 dargestellte Stellung ausfahrbar ist, in welcher ein Getränkebehälter, beispielsweise eine Getränkebüchse, ein Becher, eine Tasse in ihn einstellbar ist.

In Figur 2 ist das Gehäuse 22 der erfindungsgemäßen Halterung 10 geschnitten dargestellt, so daß der Schlitten 16 sichtbar wird. Der Schlitten 16 ist ein flaches Teil, er ist etwas breiter als ein in ihn einzustellender Getränkebehälter. Er weist zwei seitliche, nach Art der Zinken einer Gabel angeordnete Tragarme 23 auf, die bei in die Haltestellung verschobenem Schlitten 16 nach vorn aus dem Gehäuse 22 herausstehen.

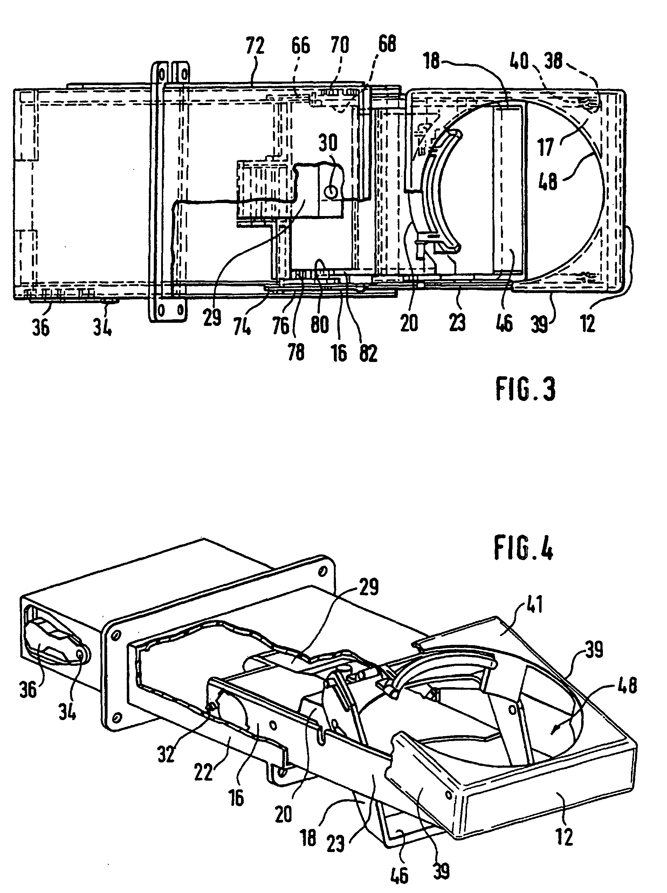

Im vorderen Bereich der Tragarme 23 des Schlittens 16 ist der Halter 17 mittels zweier seitlicher Schwenkzapfen 38, welche in Bohrungen in den Tragarmen 23 eingreifen, in eine horizontale Lage nach oben schwenkbar gelagert. Zum Verschwenken des Halters 16 sind zwei Torsionsfedern 40 vorgesehen, die den Schwenkzapfen 38 benachbart angeordnet sind (Figur 3). Der Halter 17 weist zwei Seitenwände 39 auf, die sich an den Außenseiten der Tragarme 23 befinden. An den Seitenwänden 39 sind die Schwenkzapfen 38 angebracht. Oben sind die Seitenwände 39 durch eine, eine Einstellöffnung 48 für einen Getränkebehälter aufweisende, Deckplatte 41 verbunden. Vorn am Halter 17 ist die Blende 12 quer angebracht. Nach hinten und nach unten ist der Halter 17 offen.

In seinem rückwärtigen Bereich weist der Halter 17 zwei an seinen Seitenwänden 39 angeordnete, nach innen stehende Zapfen 42 auf, die in je ein Langloch 44 der Stütze 18 eingreifen. Die Stütze 18 ist ein U-förmiger Bügel, dessen querverlaufende Jochwand eine Abstellfläche 46 für einen in die erfindungsgemäße Halterung 10 einzustellenden Getränkebahälter bildet. Zwei Schenkelwände 47 der Stütze 18 sind an den Innenseiten der Tragarme 23 des Schlittens 16 angeordnet. Die Abstellfläche 46 befindet sich bei geöffneter Halterung 10 unterhalb der Einstellöffnung 48 des Halters 16 (Figur 3).

Die Stütze 18 ist mit zwei an ihren Schenkelwänden 47 angeordneten Schwenkzapfen 50, die in Bohrungen in den Tragarmen 23 des Schlittens 16 eingreifen, schwenkbar am Schlitten 16 gelagert. Beim nach oben Schwenken des Halters 17 schwenkt die Stütze 18, die mit dem Halter 17 über die Langlöcher 44 und die in sie eingreifenden Zapfen 42 gelenkig verbunden ist, mit der Abstellfläche 46 nach unten.

Das Rückstellglied 20 ist mit zwei seitlichen Schwenkzapfen 52 schwenkbar in Bohrungen des Schlittens 16 gelagert. Es weist zwei seitliche, in der Haltestellung des Schlittens 16 aus dem Gehäuse 22 herausragende Arme 54 auf, die von einer Torsionsfeder 56 nach oben gedrückt werden. Die Arme 54 des Rückstellglieds 20 weisen je einen Steuerzapfen 58 auf, der in eine Steuerkurve 60 der Stütze 18 eingreift. Diese Steuerkurve 60 ist als kurzes, abgewinkeltes Langloch ausgebildet. Ihr Endabschnitt, in welchem sich die Zapfen 58 des Rückstellglieds 20 bei in horizontaler Lage befindlichem Halter 17 befinden, verläuft in etwa tangential zu den Schwenkzapfen 52, um welche das Rückstellglied 20 schwenkbar ist. Dadurch wird eine Verriegelung des Halters 17 über die an ihm angelenkte Stütze 18 erzielt: Eine Schwenkbewegung des Halters 17 und der Stütze 18 durch eine auf eines dieser beiden Teile 17,18 einwirkende Kraft wird durch den tangential zu einer kreisbogenförmigen Schwenkbahn der Steuerzapfen 58 des Rückstellglieds 20 um seine Schwenkzapfen 52 verlaufenden Endabschnitt der Steuerkurve 60, in welche die Steuerzapfen 58 eingreifen, verhindert. Eine Kraft auf den Halter 17 oder die Stütze 18, die ein Moment an einem dieser beiden Teile verursacht, bewirkt eine Querkraft der Steuerzapfen 58 des Rückstellglieds 20 auf den Endabschnitt der Steuerkurve 60 der Stütze 18 und verhindert ein Verschwenken der Stütze 18 und des gelenkig mit ihr verbundenen Halters 17 aus seiner horizontalen Lage. Ein Einklappen des Halters 17 und der Stütze 18 in die in Figur 1 dargestellte Stellung, in der sich diese beiden Teile 17, 18 in einer Ebene mit dem Schlitten 16 befinden, ist nur durch Niederdrücken des Rückstellglieds 20 möglich.

Das Niederdrücken des Rückstellglieds 20 erfolgt beim Einschieben des Schlittens 16 in das Gehäuse 22 durch Druck von vorn auf die Blende 12. Dabei gelangt eine Rückstellfläche 62 am oberen Rand des Rückstellglieds 20 in Anlage an einen vorderen oberen Rand des Gehäuses 22, der eine Gegenfläche 64 für die Rückstellfläche 62 bildet. Die Rückstellfäche 62 gleitet beim Einschieben des Schlittens 16 an der Gegenfläche 64 entlang, wobei das Rückstellglied 20 niedergedrückt wird. Das Rückstellglied 20 verschwenkt die Stütze 18 mittels seiner Steuerzapfen 58, die in die Steuerkurve 60 der Stütze 18 eingreifen. Über die Stütze 18, in deren Langlöcher 44 die Zapfen 42 des Halters 17 eingreifen, wird der Halter 17 in die eingeklappte Stellung verschwenkt, so daß sich der Halter 17, die Stütze 18 und das Rückstellglied 20 flach in einer Ebene mit dem Schlitten 16 befinden.

Beim vollständigen Einschieben des Schlittens 16 in das Gehäuse 22 rastet dieser in eine Verriegelung ein: Der Schlitten 16 weist in seinem rückwärtigen Bereich einen seitlich abstehenden, dreiecksförmigen Verriegelungszapfen 32 auf, der beim Einschieben des Schlittens 16 in das Gehäuse 22 in an sich bekannter Weise mit einer um einen Zapfen 34 schwenkbaren Herzkurve 36 in Eingriff gelangt. Durch Hineindrücken des Schlittens 16 an seiner Blende 12 kommt der Verriegelungszapfen 32 frei und der Schlitten 16 wird von einer Rollfeder 29 in die Haltestellung geschoben, in welcher er aus dem Gehäuse 22 vorsteht.

Zum Öffnen der erfindungsgemäßen Halterung 10 weist der Schlitten 16 an seiner Rückseite eine Halterung 24 auf, auf deren Achse 26 ein Wickel 28 einer Rollfeder 29 drehbar gehalten ist. Ein freies, abgerolltes Ende der Rollfeder 29 ist mit dem Gehäuse 22 thermoplastisch vernietet 30. Die Rollfeder 29 zieht den Schlitten 16 aus dem Gehäuse 22 heraus in die Haltestellung.

Zur Dämpfung der Verschiebbewegung des Schlittens 16 weist dieser einen drehfest in eine seiner Seitenwände 66 eingesetzen Flüssigkeits-Rotationsdämper 68 auf, dessen Zahnrad 70 mit einer am Gehäuse 22 einstückig angespritzten Zahnstange 72 kämmt (Figur 3).

Zur Dämpfung der Schwenkbewegung des Halters 17, der Stütze 18 und des Rückstellglieds 20 ist ein in einer gegenüberliegenden Seitenwand 74 des Schlittens 16 drehfest eingesetzter Rotationsdämpfer 76 vorgesehen, dessen Zahnrad 78 mit einem Zahnsegment 80 kämmt, welches an einem ins Innere des Gehäuses 22 abstehenden Arm 82 des Rückstellglieds 20 angebracht ist (Figur 3).

In Figur 4 ist die erfindungsgemäße Halterung 10 zur Verdeutlichung ihres mechanischen Aufbaus mit Aufbrüchen zur Veranschaulichung von Einzelheiten schräg von oben gesehen dargestellt.

## Patentansprüche

1. Halterung für einen Getränkebehälter, mit einem in einer schräg zu einer Horizontalen verlaufenden Schlittenführung aus einer eingeschobenen Grundstellung in eine ausgezogene Haltestellung verschiebbar geführten Schlitten (16), und mit einem eine Einstellöffnung (48) zum Einstellen des Getränkebehälters aufweisenden Halter (17), der schwenkbar an dem Schlitten (16) angebracht ist, wobei beim Verschieben des Schlittens (16) aus der Grundstellung in die Haltestellung der Halter (17) aus einer zum Schlitten (16) in etwa parallelen Ausgangslage in eine horizontale Lage verschwenkt, **dadurch gekennzeichnet, dass** die Halterung (10) eine Stütze (18) mit einer Abstellfläche (46) für den Getränkebehälter aufweist, wobei die Stütze (18) schwenkbar an dem Schlitten (16) angebracht und gelenkig mit dem Halter (17) verbunden ist, so dass beim Verschwenken des Halters (17) in die horizontale Lage die Stütze (18) mit der Abstellfläche (46) nach unten unter die Einstellöffnung (48) des Halters (17) verschwenkt, und dass die Halterung (10) ein schwenkbar am Schlitten (16) angebrachtes Rückstellglied (20) aufweist, das gelenkig an dem Halter (17) oder an der Stütze (18) angreift und das beim Einschieben des Schlittens (16) in die Grundstellung mit einer Rückstellfläche (62) an einer ortfesten Gegenfläche (64) der Halterung (10) entlanggleitet, dadurch verschwenkt und dabei den Halter (17) in seine Ausgangslage zurückverschwenkt.

2. Halterung nach Anspruch 1, **dadurch gekennzeichnet, daß** das Rückstellglied (20) in eine Steuerkurve (60) des Halters (17) bzw. der Stütze (18) eingreift, deren einer Endabschnitt, in den das Rückstellglied (20) bei horizontal stehendem Halter (17) eingreift, in der horizontalen Stellung des Halters (17) in etwa parallel zu einer Schwenkbahn des Rückstellglieds (20) oder von dieser Schwenkbahn weg nach außen zu einem Endanschlag verläuft.

3. Halterung nach Anspruch 1, **dadurch gekennzeichnet, daß** der Halter (17) und/oder das Rückstellglied (20) beim Verschieben des Schlittens (16) in die Haltestellung federbetätigt verschwenken.

4. Halterung nach Anspruch 1, **dadurch gekennzeichnet, daß** die Halterung (10) eine Verriegelung (32, 36) aufweist, die den Schlitten (16) in seiner Grundstellung verriegelt, und daß der Schlitten (16) eine Feder (29) aufweist, die ortsfest an der Halterung (10) angreift und die den Schlitten (16) nach seiner Entriegelung in die Haltestellung verschiebt.

5. Halterung nach Anspruch 4, **dadurch gekennzeichnet, daß** die Feder eine Rollfeder (29) ist.

6. Halterung nach Anspruch 1, **dadurch gekennzeichnet, daß** die Halterung (10) ein Dämpfungselement (68), das die Verschiebebewegung des Schlittens (16) und/oder ein Dämpfungselement (76), das die Schwenkbewegung des Halters (17) dämpft, aufweist.

## Claims

1. Holding device for a drinks container, having a slide member (16) which is guided so as to be displaced, in a slide guide extending obliquely to the horizontal, from a basic position, in which it is pushed in, into an extended holding position, and having a holder (17) which has an insertion opening (48) for the insertion of the drinks container and is pivotally mounted on the slide member (16), and which, when the slide member (16) is displaced from the basic position into the holding position, pivots out of an initial position approximately parallel to the slide member (16) into a horizontal position, **characterized in that** the holding device (10) has a support (18) with a setting-down surface (46) for the drinks container, the support (18) being pivotally mounted on the slide member (16) and linked with the holder (17) so that, when the holder (17) is pivoted into the horizontal position, the support (18) pivots with the setting-down surface (46) downwards beneath the insertion opening (48) of the holder (17), and **in that** the holding device (10) has a return member (20) which is pivotally mounted on the slide member (16), is linked with the holder (17) or with the support (18), and, when the slide member (16) is pushed into the basic position, slides with a return surface (62) along a fixed complementary surface (64) of the holding device (10), pivots thereby, and so pivots the holder (17) back into its initial position.

2. Holding device according to Claim 1, **characterized in that** the return member (20) engages in a control cam (60) of the holder (17) or of the support (18), one end portion of which, in which the return member (20) engages when the holder (17) is horizontal, extends, in the horizontal position of the holder (17), approximately parallel to a pivot path of the return member (20) or outwards away from this pivot path to an end stop.

3. Holding device according to Claim 1, **characterized in that** the holder (17) and/or the return member (20) pivot into the holding position on displacement of the slide member (16), actuated by a spring.

4. Holding device according to Claim 1, **characterized in that** the holding device (10) has a locking means (32, 36) which locks the slide member (16) in its basic position, and **in that** the slide member (16) has a spring (29) which engages in a fixed position with the holding device (10) and which displaces the slide member (16) into the holding position after it has been unlocked.

5. Holding device according to Claim 4, **characterized in that** the spring is a scroll spring (29).

6. Holding device according to Claim 1, **characterized in that** the holding device (10) has a damping element (68) which damps the displacement movement of the slide member (16) and/or a damping element (76) which damps the pivoting movement of the holder (17).

## Revendications

1. Support pour un conteneur de boisson comportant un chariot (16) guidé dans une glissière de chariot passant en biais par rapport à une horizontale et déplaçable d'une position initiale à l'état entré à une position de maintien à l'état sorti, et un élément de maintien (17) qui présente une ouverture d'ajustement (48) pour l'ajustement du conteneur de boisson et qui est placé sur le chariot (16) de façon à pivoter, lors du déplacement du chariot (16) de la position initiale à la position de maintien, l'élément de maintien (17) pivotant d'une position initiale à peu près parallèle au chariot (16) à une position horizontale, **caractérisé en ce que** le support (10) présente un bras-support (18) avec une surface de tablette (46) pour le conteneur de boisson, le bras-support (18) étant disposé de façon à pivoter sur le chariot (16) et étant articulé avec l'élément de maintien (17) de telle sorte que, lors du pivotement de l'élément de maintien (17) dans la position horizontale, le bras-support (18) pivote avec la surface de tablette (46) vers le bas sous l'ouverture d'ajustement (48) de l'élément de maintien (17) et **en ce que** le support (10) présente un élément de rappel (20) qui est disposé sur le chariot (16) de façon à pivoter, qui est articulé sur l'élément de maintien (17) ou le support (18) et qui, lors de l'insertion du chariot (16) dans la position initiale, glisse avec une surface de rappel (62) le long d'une contre-surface (64) fixe du support (10), puis pivote et repivote en même temps l'élément de maintien (17) dans sa position initiale.

2. Support selon la revendication 1, **caractérisé en ce que** l'élément de rappel (20) s'engrène dans une came de commande (60) de l'élément de maintien (17) respectivement du bras-support (18) dont l'une des sections terminales dans laquelle l'élément de rappel (20) s'engage quand l'élément de maintien (17) est à l'horizontale, passe dans la position horizontale de l'élément de maintien (17) à peu près parallèlement à une trajectoire de pivotement de l'élément de rappel (20) ou à distance de cette trajectoire de pivotement vers l'extérieur vers une butée de fin de course.

3. Support selon la revendication 1, **caractérisé en ce que**, lors du déplacement du chariot (16) dans la position de maintien, l'élément de maintien (17) et/ou l'élément de rappel (20) pivotent sous l'effet d'un ressort.

4. Support selon la revendication 1, **caractérisé en ce que** le support (10) présente un blocage (32, 36) qui bloque le chariot (16) dans sa position initiale et **en ce que** le chariot (16) présente un ressort (29) qui est placé de manière fixe contre le support (10) et déplace le chariot (16) dans la position de maintien, après son déblocage.

5. Support selon la revendication 4, **caractérisé en ce que** le ressort est un ressort à col de cygne (29).

6. Support selon la revendication 1, **caractérisé en ce que** le support (10) présente un élément d'amortissement (68) qui amortit le déplacement du chariot (16) et/ou un élément d'amortissement (76) qui amortit le pivotement de l'élément de maintien (17).
